# EUROPEAN PATENT SPECIFICATION

(11) **EP 2 083 000 B1**
(45) Date of publication and mention of the grant of the patent: **04.12.2019**
(21) Application number: 07807664.3
(22) Date of filing: 20.09.2007
(51) Int. Cl.: C04B 35/638, B28B 11/24, F26B 3/02, F26B 21/00, C04B 38/00

(54) **METHOD FOR PRETREATING HONEYCOMB FORMED ARTICLE BEFORE FIRING**
VERFAHREN ZUR VORBEHANDLUNG EINES WABENFORMKÖRPERS VOR DAS BRENNEN
PROCÉDÉ DE PRÉTRAITEMENT D'UN MOULAGE EN NID D'ABEILLE AVANT CUISSON

(30) Priority: 31.10.2006 JP 2006296233
(43) Date of publication of application: 29.07.2009
(73) Proprietor: NGK Insulators, Ltd., Nagoya-shi, Aichi 467-8530 (JP)
(72) Inventor: HAYASHI, Shinzou, Nagoya-shi Aichi 467-8530 (JP); SAKURAI, Takayuki, Nagoya-shi Aichi 467-8530 (JP)
(74) Representative: Mewburn Ellis LLP
(86) International application number: PCT/JP2007/068312
(87) International publication number: WO 2008/053647

(56) References cited:
- WO-A1-2005/023503
- WO-A1-2005/024326
- DE-A1- 2 113 848
- JP-A- 07 109 177
- JP-A- 07 109 178
- JP-A- 08 245 270
- US-A1- 2002 109 269
- US-A1- 2003 102 602
- US-A1- 2006 283 039
- US-A1- 2007 006 480

## Description

### Technical Field

The present invention relates to a method for pretreating a honeycomb formed article, which is an unfired article of a honeycomb structure, before firing.

### Background Art

A honeycomb structure is widely used for catalyst carriers, various kinds of filters, and the like. Recently, a honeycomb structure has attracted attention as a diesel particulate filter (DPF) for trapping particulate matter discharged from a diesel engine.

A honeycomb structure mostly employs ceramics as the main component. In order to manufacture such a honeycomb structure, after water and various additives such as a binder are added to a ceramic raw material to prepare kneaded clay in the first place, the kneaded clay is subjected to extrusion-forming to obtain a honeycomb-shaped formed article (honeycomb formed article). The honeycomb formed article is fired after drying and the like to manufacture a honeycomb structure.

As drying methods for the honeycomb formed article, there have been well known a dielectric drying method, where drying is performed by the use of high-frequency wave energy generated by applying an electric current between electrodes provided in the upper portion and the lower portion of the honeycomb formed article, and a hot air drying method, where drying is performed by introducing hot air generated by a gas burner or the like. However, recently, instead of these drying methods, or together with these drying methods, there has been employed a drying method utilizing microwaves having the advantage of high drying speed and the like (microwave drying method) (see, e.g., Patent Documents 1 to 3).

However, in such a microwave drying method, there is a case that drying in the upper and lower end portions and the outer peripheral portion of the honeycomb formed article lags behind drying in the other portions to have difficulty in drying the whole honeycomb formed article at a uniform speed. Since a honeycomb formed article contracts due to evaporation of water, uneven drying speed is prone to cause a defect such as a deformation or a damage. Further, thinning of the partition walls (ribs) separating the cells is proceeding, and a honeycomb formed article having thinner partition walls has a deformation or the like more easily. Therefore, uniformalization of drying speed has recently been a particularly important task.

On the other hand, it is necessary to remove also a binder contained in a honeycomb formed article together with water. In addition, upon removing the binder (degreasing), a quick treatment is required without generating any deformation or the like in the honeycomb formed article.

As a general degreasing method, there is a method where the formed article is heated to evaporate and thermally decompose the binder in the formed article (see, e.g., Patent Documents 4 and 5). However, since a great amount of decomposed gas (CO₂ or the like) is generated by thermal decomposition of an organic binder in the degreasing method where the binder is evaporated and thermally decomposed by heating the honeycomb formed article, environmental load is heavy. In addition, since a temperature difference is caused inside the honeycomb formed article due to rapid heat generation upon thermal decomposition of the binder, there arises a problem of easily generating a defect such as a deformation and a damage. Though such a problem can be solved by suppressing internal heat generation by slowing down the temperature rise rate, it has the disadvantage of an extremely long treating time.
Patent Document 1: JP-A-2002-283329
Patent Document 2: JP-A-2002-283330
Patent Document 3: WO-2005/023503 pamphlet
Patent Document 4: JP-B-59-27743
Patent Document 5: WO-2005/047207 pamphlet

WO 2005/023503 describes an undried honeycomb formed body subjected to high-frequency heating in an atmosphere where humidity and temperature are maintained at 30 to 65% and 75 to 130°C, respectively, using steam, such that 50 to 99 mass % of water contained in the undried honeycomb formed body is evaporated at the end of high-frequency heating, whereby the amount of water vaporized from the outer part of the undried honeycomb formed body is increased, thereby reducing a difference between amount of water vaporized from the inner part of the undried honeycomb formed body and that of water vaporized from the outer part thereof as well as reducing a difference between drying degree of the inner part of the undried honeycomb fanned body and that of the outer part thereof.

WO 2005/024326 describes a honeycomb fanned structure drying method including causing dried honeycomb formed structures placed on stands to pass through a drying apparatus, thereby drying the undried honeycomb formed structures through high-frequency heating, to thereby form dried honeycomb fanned structures. A humidity of 30 to 65% and a temperature of 75 to 130°C are maintained using steam.

US 2003/102602 describes a method and an apparatus for manufacturing a ceramic honeycomb molding having many cells formed by arranging cell walls in a honeycomb pattern. The drying process in which the honeycomb moldings are dried, and a storage process between the extruding process and the drying process, are conducted such that the honeycomb moldings are maintained in a high humidity atmosphere with humidity not less than 70% and the temperature not less than 80°C using steam.

US 2002/109269 describes a method of fabricating a honeycomb body and a drying system. Extrusion-molded honeycomb bodies are dried by being exposed to a high-humidity atmosphere of 70% or more (maintained using steam) while at the same time being irradiated with microwaves in the frequency range of 1,000 to 10,000 MHz.

### Disclosure of the Invention

The present invention has been made in view of such problems of prior art and aims to provide a method for pretreating a honeycomb formed article before firing, the method being capable of pretreating a honeycomb formed article in a short period of time before firing with suppressing generation of disadvantages such as a deformation and a damage.
In addition, the present invention provides a drying method of a honeycomb formed article, and a drying apparatus.

As a result of the inventors' keen study for achieving the aforementioned aims, they found out that the aforementioned aims can be achieved by raising the temperature of a honeycomb formed article by superheated steam having a predetermined temperature, and then raising the temperature of the superheated steam to predetermined temperature and maintaining the temperature, which has led to the completion of the present invention. In addition, as a result of the inventors' keen study for achieving the aforementioned aims, they found out that the aforementioned aims can be achieved by microwave heating and/or dielectric heating in a superheated steam atmosphere, which has led to the completion of the present invention.

That is, according to the present invention, there are provided methods and apparatus as set out in the appended claims.

According to a method for pretreating a honeycomb formed article before firing, a honeycomb formed article can be pretreated before firing in a shorter period of time with suppressing generation of disadvantages such as a deformation and a damage. In addition, according to a method for drying a honeycomb formed article of the present invention, a honeycomb formed article can be dried before firing in a shorter period of time with suppressing generation of disadvantages such as a deformation and a damage.

### Brief Description of the Drawings

[Fig. 1] Fig. 1 is a perspective view showing an example of a honeycomb formed article used in a method for pretreating a honeycomb formed article before firing of the present invention.
[Fig. 2] Fig. 2 is a perspective view showing another example of a honeycomb formed article used in a method for pretreating a honeycomb formed article before firing of the present invention.
[Fig. 3] Fig. 3 is a schematic view showing a constitutional example of a continuous treatment apparatus.
[Fig. 4] Fig. 4 is a flow chart showing an embodiment of a method for pretreating a honeycomb formed article before firing of the present invention.
[Fig. 5] Fig. 5 is a graph where a mass reduction rate (%) is plotted with respect to a superheated steam temperature (zone (2)) (°C).
[Fig. 6] Fig. 6 is a graph where a mass reduction rate (%) is plotted with respect to a superheated steam temperature (°C) .
[Fig. 7] Fig. 7 is a cross-sectional view schematically showing a cross section perpendicular to a direction for conveying a honeycomb formed article of one embodiment of a drying apparatus for a honeycomb formed article of the present invention.
[Fig. 8] Fig. 8 is a cross-sectional view schematically showing a cross section in parallel with a direction for conveying a honeycomb formed article of one embodiment of a drying apparatus for a honeycomb formed article of the present invention.
[Fig. 9] Fig. 9 is a cross-sectional view schematically showing a cross section perpendicular to a direction for conveying a honeycomb formed article of another embodiment of a drying apparatus for a honeycomb formed article of the present invention.
[Fig. 10] Fig. 10 is a cross-sectional view schematically showing a cross section in parallel with a direction for conveying a honeycomb formed article of another embodiment of a drying apparatus for a honeycomb formed article of the present invention.
[Fig. 11A] Fig. 11A is a plan view showing a state that a flow rate-adjusting plate is mounted on a conveyance palette.
[Fig. 11B] Fig. 11B is a cross-sectional view cut along X-X' of Fig. 11A, showing a state that a flow rate-adjusting plate is mounted on a conveyance palette.
[Fig. 12] Fig. 12 is a plan view schematically showing a part of another embodiment of a drying apparatus of a honeycomb formed article of the present invention and a honeycomb formed article.
[Fig. 13] Fig. 13 is a graph showing thermal change of a honeycomb formed article upon drying in Example 13.
[Fig. 14] Fig. 14 is a graph showing thermal change of a honeycomb formed article upon drying in Comparative Example 6.
[Fig. 15] Fig. 15 is a graph showing a remaining water amount in a honeycomb formed article after drying in Example 14.
[Fig. 16] Fig. 16 is a graph showing a remaining water amount in a honeycomb formed article after drying in Comparative Example 7.
[Fig. 17] Fig. 17 is a graph showing a remaining water amount in a honeycomb formed article after drying in Example 15.

### Description of Reference Numerals

1: honeycomb formed article, 2: partition wall, 3: cell, 4: outer peripheral wall, 5: conveyer, 6: ejection hole, 7: treatment chamber, 9: gas exhaust port, 10: continuous treatment apparatus, 11: zone (1), 12: zone (2), 13: zone (3), 21: drying apparatus for honeycomb formed article, 22: treatment chamber, 23: superheated steam generator, 24: conveyance palette, 24a: through-hole, 25: superheated steam inflow port, 26: waveguide, 27: mixer, 28: belt conveyer, 29: carrying-in port, 30: carrying-out port, 31: drain discharge port, 32: saturated water vapor feed pipe, 33: superheated steam feed pipe, 34: steam recovery pipe, 35: drain pipe, 41: honeycomb formed article, 42: flow rate adjusting plate, 43: shielding plate, 51: electrode, D: water difference

### Best Mode for Carrying out the Invention

Hereinbelow, the best mode for carrying out the present invention will be described. However, the present invention is by no means limited to the following embodiments.

One embodiment of a method for pretreating a honeycomb formed article before firing of the present invention is a method for pretreating an unfired honeycomb formed article of a raw material composition containing a ceramic raw material, water, and a binder and having a plurality of cells separated by partition walls and functioning as fluid passages before firing, wherein the method has a first step of passing superheated steam having a temperature of 100 to 150°C through the cells to raise temperature of the honeycomb formed article, preferably to hold the temperature in equilibrium, and then maintaining the temperature of the superheated steam at the temperature of the superheated steam passed through the cells or more and 200°C or less. The details are hereinbelow described.

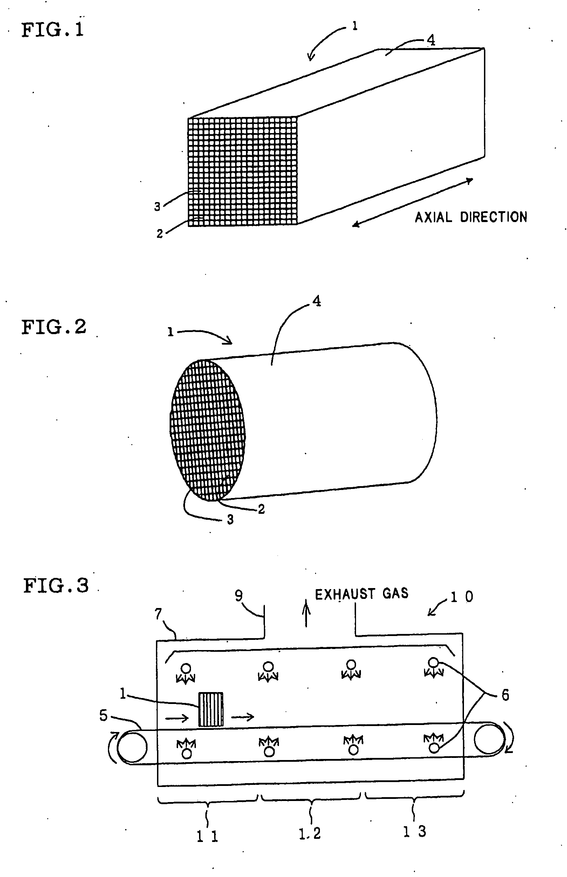

A honeycomb formed article used as an article to be treated in a method for pretreating a honeycomb formed article before firing of the present embodiment has a structure as shown in Figs. 1 and 2, for example. That is, a honeycomb formed article 1 has a plurality of cells 3 functioning as fluid passages separated from one another by partition walls 2. In addition, the honeycomb formed article 1 is generally constituted in such a manner that the outer peripheral wall 4 surrounds a plurality of cells 3. Incidentally, there is no limitation on the cross-sectional shape perpendicular to the axial direction (flow passage direction) of the cells 3, and a square as shown in Fig. 1, a circle as shown in Fig. 2, or the like, may be selected arbitrarily.

A honeycomb formed article is an unfired article constituted of a raw material composition containing a ceramic raw material, water, and a binder. Examples of the ceramic raw material include oxide ceramic such as alumina, mullite, zirconia, and cordierite; non-oxide ceramic such as silicon carbide, silicon nitride, aluminum nitride; and the like. Alternatively, there may be employed a silicon carbide/metal silicon composite material, a silicon carbide/graphite composite material, or the like.

Examples of the binder include polyvinyl alcohol, polyethylene glycol, starch, methyl cellulose, carboxymethyl cellulose, hydroxyethyl cellulose, hydroxypropylmethyl cellulose, polyethylene oxide, sodium polyacrylate, polyacryl amide, polyvinyl butyral, ethyl cellulose, acetylcellulose, polyethylene, ethylene-vinyl acetate copolymer, polypropylene, polystyrene, acrylic resin, polyamide resine, glycerin, polyethyleneglycol, and dibutyl phthalate.

In the method for pretreating a honeycomb formed article before firing of the present embodiment, superheated steam at a predetermined temperature is passed through cells in the first place to maintain the temperature of the honeycomb formed article at equilibrium. When the honeycomb formed article is heated by the use of hot air or microwaves, drying proceeds at the same time, and thereby it becomes difficult to make drying proceed at a uniform speed in each portion of the honeycomb formed article. In contrast, in the method for pretreating a honeycomb formed article before firing of the present embodiment, since the temperature of the honeycomb formed article made to be in equilibrium by the use of superheated steam, the thermal equilibrium state can be obtained by raising temperature at a state that drying does not proceed. In addition, by passing superheated steam through the cells, the equilibrium state can quickly be obtained in comparison with the case that superheated steam is simply sprayed or the like.

The temperature of the superheated steam passed through the cells is 100 to 150°C, preferably 110 to 130°C. When the temperature of the superheated steam passed through the cells is below 100°C, almost all steam builds up condensation, and thereby the article swells humidity to easily cause a defect such as shape deformation though the article can be heated. On the other hand, when the temperature is above 150°C, drying proceeds, and drying cannot be performed at a uniform speed, thereby easily causing a deformation, a damage, or the like. The optimum temperature of the superheated steam is not unambiguous and should be determined by the kind of the ceramics and the kind of the binder. Generally, it is preferable to measure changes in water content in the article due to passing of the superheated steam to set the temperature where the change rate is zero. Further, at the initial stage of the passing of the superheated steam, since the temperature difference between the article and the superheated steam is large, it is preferable to set the temperature to be about 20°C higher than the temperature obtained under the above conditions in order to inhibit condensation from being caused by heating the article.

Though the time for passing the superheated steam through the cells, that is, the time required for obtaining thermal equilibrium of the honeycomb formed article differs depending on the shape, size, and the like of the honeycomb formed article to be treated, it is generally 10 to 600 seconds, preferably about 10 to 30 seconds. When the time for passing the superheated steam through the cells is too short, there is a case that the equilibrium state cannot be obtained sufficiently, and thereby uniform drying may be impossible in the second step. On the other hand, when the time for passing the superheated steam through the cells is too long, there causes a temperature difference between the inlet side and the outlet side of the superheated steam until the equilibrium state is obtained to cause partial drying or swelling, and thereby uniform drying may be impossible in the second step.

In the method for pretreating a honeycomb formed article before firing of the present embodiment, drying of a honeycomb formed article can be performed by, after raising the temperature of the honeycomb formed article, preferably after the equilibrium state is obtained, raising the temperature and maintaining the temperature of the superheated steam at the temperature of the superheated steam passed through the cells or more and 200°C or less, preferably 100 to 200°C, more preferably 120 to 150°C. Alternatively, also by changing the temperature of the superheated steam in accordance with the proceedings of the drying, a honeycomb formed article can be dried. Incidentally, it is preferable to start drying after the temperature of the honeycomb formed article obtains equilibrium because the drying speed becomes more uniform and defects such as a deformation and a damage can be inhibited from being caused. In addition, since superheated steam is used, drying can be performed in a shorter period of time than in the case of using hot air. In the humidity control drying which has conventionally been employed, it is necessary to proceed drying with controlling two parameters of temperature and humidity. However, for the superheated steam, only temperature control is required. Therefore, the method for preheating a honeycomb formed article before firing of the present embodiment has the advantage of being simple and easy in comparison with conventional drying methods.

Incidentally, when the temperature of the superheated steam upon drying a honeycomb formed article is below the temperature of the superheated steam passed through the cells, the drying hardly proceeds. On the other hand, when the temperature is above 200°C, drying proceeds rapidly to easily cause a deformation or a damage in the honeycomb formed article.

The time for raising the temperature of the superheated steam and maintaining the temperature, that is, the time required for drying a honeycomb formed article is generally 1 to 120 minutes, preferably about 1 to 20 minutes though it differs depending on the shape, size, water content, and the like of the honeycomb formed article to be treated. Incidentally, it is preferable to irradiate microwaves to the honeycomb formed article with raising and maintaining the temperature of the superheated steam because drying can be performed more rapidly.

Further, examples of the method for passing the superheated steam through the cells of the honeycomb formed article include (1) a method where a honeycomb formed article is mounted perpendicularly to force the superheated steam from the upper side or the lower side of the cells by the use of a blower fan or the like, (2) a method where the superheated steam is sucked by disposing an exhaust fan, and (3) a method where passing of the steam is caused naturally by the use of a convection current (ascending current) due to the temperature difference of the superheated steam. It is also possible to adjust drying speed by controlling the steam amount in each position in the honeycomb formed article by controlling the current of the superheated steam at the inlet and outlet of the cells by the use of a baffle plate.

In addition, in the method for pretreating a honeycomb formed article before firing of the present embodiment, after the first step, the method further has the second step where the honeycomb formed article is maintained in an atmosphere of superheated steam at a temperature greater than the temperature in the first step and 600°C or less. This enables to remove (degrease) the binder having a higher boiling point than that of water and contained in the honeycomb formed article. Incidentally, there is the case that a part of or all the binder is decomposed and removed besides the case that the binder is removed by being evaporated without being decomposed. Incidentally, when superheated steam is used upon degreasing, abnormal heat generation like the case of removing the binder by combustion is hardly caused, and thereby a damage of the honeycomb formed article due to abnormal heat generation is hardly caused.

When the temperature of the superheated steam in the second step is below the temperature in the first step, the binder cannot be removed. On the other hand, when the temperature is above 600°C, the ceramic raw material as a constituent raw material may be deformed by the steam, and a defect may be caused in the following firing step. In addition, the honeycomb formed article tends to be brittle and handling of the honeycomb formed article tends to be difficult because the binder tends to be removed too much. Incidentally, the temperature of the superheated steam in the second step is preferably 400°C or less, more preferably 300°C or less.

In the method for pretreating a honeycomb formed article before firing of the present embodiment, it is preferable that the first step (drying step) and the second step (degreasing step) are continuously performed by one treatment apparatus because an efficient pretreatment before firing can be performed. Fig. 3 is a schematic view showing a constitutional example of a continuous treatment apparatus. The continuous treatment apparatus 10 is provided with a treatment chamber 7 having ejection holes 6 capable of ejecting out the superheated steam and a gas exhaust port 9 capable of discharging gas generated inside the chamber. The inside of the treatment chamber 7 is provided with a conveyance means such as a conveyer 5 for sequentially conveying honeycomb formed articles 1 to be treated. Incidentally, it is preferable that the treatment chamber 7 has a plurality of ejection holes 6. In addition, it is preferable that the temperature of the superheated steam in each of the regions (zone (1) 11, zone (2) 12, and zone (3) 13) separated in the conveyance direction of the conveyer 5 is independently adjustable.

The honeycomb formed article 1 mounted on the conveyer 5 sequentially passes the regions where superheated steam having different temperatures by each region is ejected and filled in accordance with the proceedings of the treatment chamber 7. At this time, by setting the temperature of the superheated steam in each region to the temperature in each temperature for the aforementioned first step and second step, drying and degreasing of the honeycomb formed article can effectively be performed in a sequential workflow line operation.

There is no particular limitation on the cell density, partition wall thickness, cell shape, size, and the like of a honeycomb formed article subjected to pretreatment before firing in a method for pretreating a honeycomb formed article before firing of the present invention. However, the method is particularly effective in the case of pretreating a honeycomb formed article having thin partition walls (e.g., partition wall thickness of 150 µm or less), where a deformation or the like is easily caused, or a large-sized honeycomb formed article (e.g., whole length of flow passages of 200 to 1000 mm, outer diameter of 150 to 600 mm), where a difference in drying speed is easily generated depending on a portion.

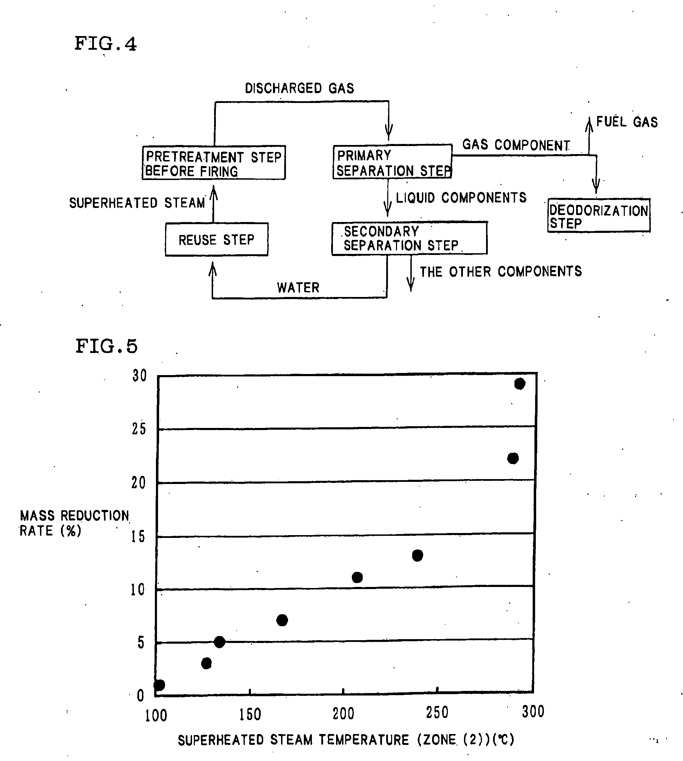

Next, one embodiment of a method for pretreating a honeycomb formed article before firing of the present invention will be described. Fig. 4 is a flow chart showing an embodiment of a method for pretreating a honeycomb formed article before firing of the present invention. As shown in Fig. 4, the method for pretreating a honeycomb formed article before firing of the present embodiment includes a pretreatment step before firing, a primary separation step, a secondary separation step, and a reuse step.

The pretreatment step before firing is a step for performing the aforementioned method for pretreating a honeycomb formed article before firing of an embodiment of the present invention described above. In the pretreatment step before firing, drying and degreasing of a honeycomb formed article by the use of superheated steam are performed. Therefore, in the pretreatment step before firing, water and exhaust gas containing components derived from the binder are discharged. Incidentally, the "components derived from the binder" in the present specification includes not only the components generated by the decomposition of the binder contained in the raw material composition constituting the honeycomb formed article, but also the binder itself conceptually.

The primary separation step is a step for separating the exhaust gas generated and discharged in the pretreatment step before firing into gas components containing components derived from the binder and liquid components containing water. For separating the exhaust gas into gas components and liquid components, a general condenser, heat exchanger, or the like can be used. Incidentally, it is preferable to use a heat exchanger from the viewpoint of energy efficiency because the recovered heat can be used for heating water in the reuse step described later.

Since degreasing is performed by using superheated steam in the pretreatment step before firing, the separated gas components contains components derived from the binder in high concentration. Therefore, the gas components can be reused as fuel gas or the like. Incidentally, when it is difficult to reuse the gas components, it is preferable to further add a deodorization step for deodorizing at least a part of the gas components. In the deodorization step, a general deodorization apparatus can be used.

The secondary separation step is a step for separating the liquid components separated in the primary separation step into water and the other component. In order to separate the liquid components into water and the other component, distillation or extraction can be employed, for example. The other component separated above is so-called acetic liquid, which can be reused as fuel or the like though it may be disposed as a waste product.

The reuse step is a step where superheated steam is obtained by heating the separated water by the use of a heating apparatus such as a boiler to feed the superheated steam to the pretreatment step before firing. Thus, the method for pretreating a honeycomb formed article before firing of the present embodiment do not simply disposing exhaust gas generated by the pretreatment of a honeycomb formed article before firing, but disposing only the remaining components with taking out useful components and providing the components to reuse. Therefore, the method is excellent in energy efficiency and environmentally friendly. In addition, superheated steam used in the pretreatment step before firing is stable and in no danger of ignition like inert gas. Therefore, the method for pretreating a honeycomb formed article before firing of the present embodiment has very high safety.

Next, one embodiment of a method for drying a honeycomb formed article of the present invention will be described with referring to drawings. A method for drying a honeycomb formed article of the present invention is used as the aforementioned first step of a pretreatment of a honeycomb formed article before firing of the present invention. This enables to uniformly dry the whole unfired honeycomb formed article.

The method for drying a honeycomb formed article of the present embodiment is a method for pretreating an unfired honeycomb formed article having a plurality of cells functioning as fluid passages and separated by partition walls made of raw material composition containing a ceramic raw material, water, and a binder, where the unfired honeycomb formed article is subjected to microwave heating and/or dielectric heating in a superheated steam atmosphere at 100 to 200°C in a treatment chamber.

It is preferable that the honeycomb formed article used as a target object to be treated in a method for drying a honeycomb formed article of the present embodiment is similar to the honeycomb formed article used as the target object to be treated in the aforementioned method for pretreating a honeycomb formed article before firing of the present invention.

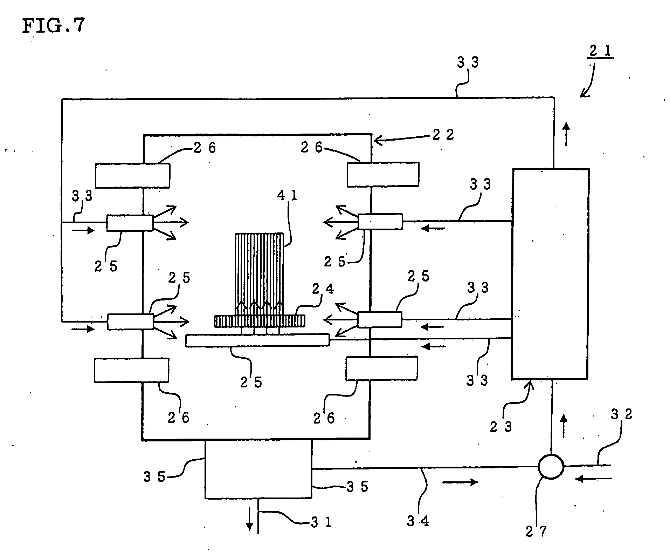

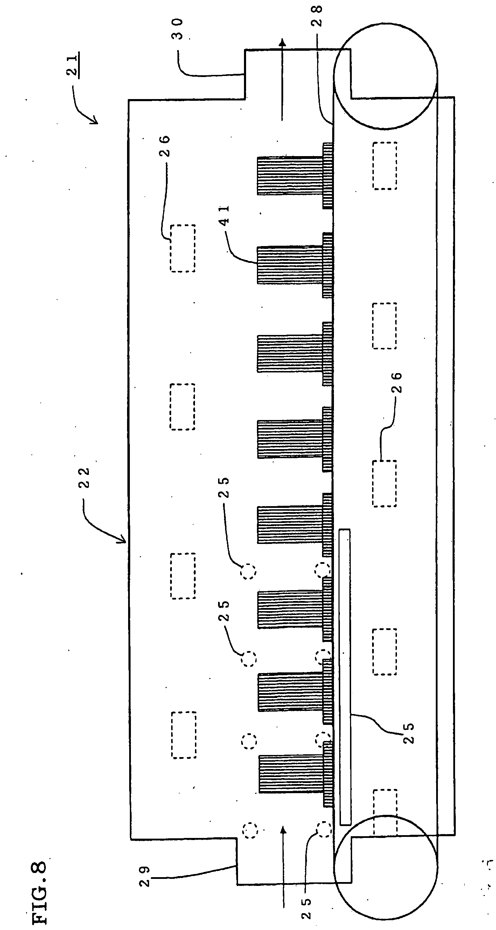

Fig. 7 is a cross-sectional view schematically showing a cross section perpendicular to a direction for conveying a honeycomb formed article of one embodiment of a drying apparatus for a honeycomb formed article of the present invention, the drying apparatus being used for carrying out a method for drying a honeycomb formed article of the present invention. In addition, Fig. 8 is a cross-sectional view schematically showing a cross section in parallel with a direction for conveying a honeycomb formed article of one embodiment of a drying apparatus for a honeycomb formed article of the present invention, the drying apparatus being used for carrying out a method for drying a honeycomb formed article of the present invention. Incidentally, in Fig. 8, the superheated steam generator and the pipes are omitted. The drying apparatus 21 for a honeycomb formed article of the present embodiment is provided with a treatment chamber 22 for drying an unfired honeycomb formed article 41 therein, a superheated steam generator 23 for generating superheated steam and allowing the superheated steam to flow into the treatment chamber 22, a superheated steam inflow port 25 disposed in the treatment chamber 22, and a waveguide 26 for introducing microwaves into the treatment chamber 22, the waveguide 26 being disposed in the treatment chamber 22. A honeycomb structure 41 mounted on a conveyance palette 24 is carried in the treatment chamber 22 and dried. Though the honeycomb formed articles are conveyed in one row in the treatment chamber 22, they may be conveyed in two ore more rows. In the drying apparatus 21 for a honeycomb formed article of the present embodiment, a superheated steam inflow port 25 is arranged also in the lower part of the conveyance palette 24 to allow the superheated steam to flow from one end face (lower end face) of a honeycomb formed article 41 through the cells of the honeycomb formed article 41. In addition, the conveyance palette 24 is formed to be conveyed by a belt conveyer 28 from the carrying-in port 29 toward the carrying-out port 30. Though the drying apparatus for a honeycomb formed article of the present embodiment is a continuous apparatus where honeycomb formed articles are conveyed by a belt conveyer, a drying apparatus for a honeycomb formed article of the present invention is not limited to such a continuous type and may be a batch type capable of treating one or a plurality of honeycomb formed articles at the same time.

In the method for drying a honeycomb formed article of the present embodiment, the inside of the treatment chamber 22 is controlled to have a superheated steam atmosphere having a temperature of 100 to 200°C. The temperature of the superheated steam atmosphere is preferably 110 to 170°C, more preferably 120 to 150°C. When the temperature of the superheated steam atmosphere is below 100°C, almost all the steam builds up condensation to cause humidity-swelling of the article, thereby easily causing a defect such as a shape deformation, though the article can be heated. When the temperature is above 200°C, drying proceeds rapidly, and a deformation or a damage is easily caused in the honeycomb formed article. The superheated steam is generated in the superheated steam generator 23 and irradiated into the treatment chamber 22 from the superheated steam inflow port 25 through the superheated steam feed pipe (pipe). Here, superheated steam means steam in a complete gas state (dry steam) having a temperature of a boiling point or more and obtained by further heating saturated steam (humid steam).

In the method for drying a honeycomb formed article of the present embodiment, microwaves for microwave-heating an unfired honeycomb formed body 41 in the aforementioned superheated steam atmosphere are introduced through the wave guide 26. The microwaves have a frequency of preferably 900 to 30000 MHz, more preferably 900 to 3000 MHz.

Since a honeycomb formed article is thus dried by microwave-heating in a superheated steam atmosphere, the temperature rise in the outer peripheral portion, which has conventionally had slow drying speed, of a honeycomb formed article can be promoted. This enables to increase drying speed in the outer peripheral portion, thereby inhibiting a deformation or a damage in the honeycomb formed article. In addition, by performing the microwave-heating in the superheated steam atmosphere, the temperature rise can be promoted not only in the outer peripheral portion but also in the inside portion, and the temperature rise curves of the outer peripheral portion and the inside portion can be close, thereby further inhibiting a deformation or a damage in the honeycomb formed article.

In the method for drying a honeycomb formed article of the present embodiment, the superheated steam is allowed to flow into the unfired honeycomb formed article 41 from one end face in such a manner that the flow rate in the outer peripheral portion is higher than that in the inside portion. In the present embodiment, when a honeycomb formed article 41 mounted on a conveyance palette 24 is conveyed in the treatment chamber, superheated steam is irradiated toward the lower end face of the honeycomb formed article 41. At this time, it is preferable that the flow rate of the superheated steam passing through the outer peripheral portion of the honeycomb formed article 41 is higher than the flow rate of the superheated steam passing through the inside portion. This enables to promote the temperature rise in the outer peripheral portion, where drying speed has conventionally been slow, of the honeycomb formed article. Here, the outer peripheral portion of a honeycomb formed article means the portion in the range of 1/2 of the distance from the outer periphery to the central axis from the outer periphery toward the central axis of the honeycomb formed article. In addition, the inside portion of a honeycomb formed article means a portion in the range inside the above outer peripheral portion (range of 1/2 of the distance from the outer periphery to the central axis from the central axis toward the outer periphery).

A method for allowing superheated steam to flow into the honeycomb formed article 41 from one end face is preferably be similar to the "method for passing superheated steam in the cells of a honeycomb formed article" employed in the aforementioned method for pretreating a honeycomb formed article before firing of the present invention.

In the method for drying a honeycomb formed article of the present embodiment, it is preferable that the steam discharged from the treatment chamber is heated again to obtain superheated steam, which is allowed to flow into the treatment chamber 22 again. As shown in Fig. 7, in the present embodiment, steam discharged from the treatment chamber 22 through the drain pipe 35 is sent to the mixer 27 through the steam recovery pipe 34. Then, the steam is mixed with saturated steam fed through the saturated water vapor feed pipe 32 by the mixer 27, the mixed gas is sent to the superheated steam generator 23 to generate superheated steam in the superheated steam generator 23, and the superheated steam is allowed to flow into the treatment chamber 22 again through the superheated steam feed pipe 33. The liquid discharged through the drain pipe 35 is discharged outside from the drain discharge port 31. The steam discharged from the treatment chamber 22 may be sent to the superheated steam generator 23 without being mixed with saturated steam. By thus reusing discharged steam, energy use and water use can be reduced.

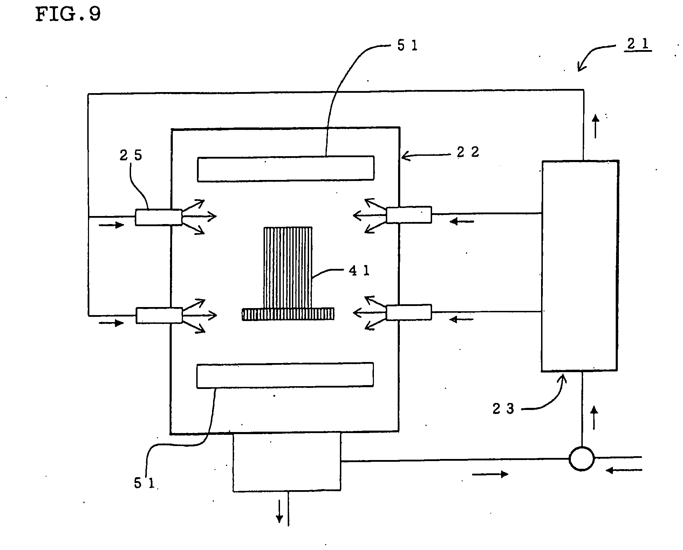

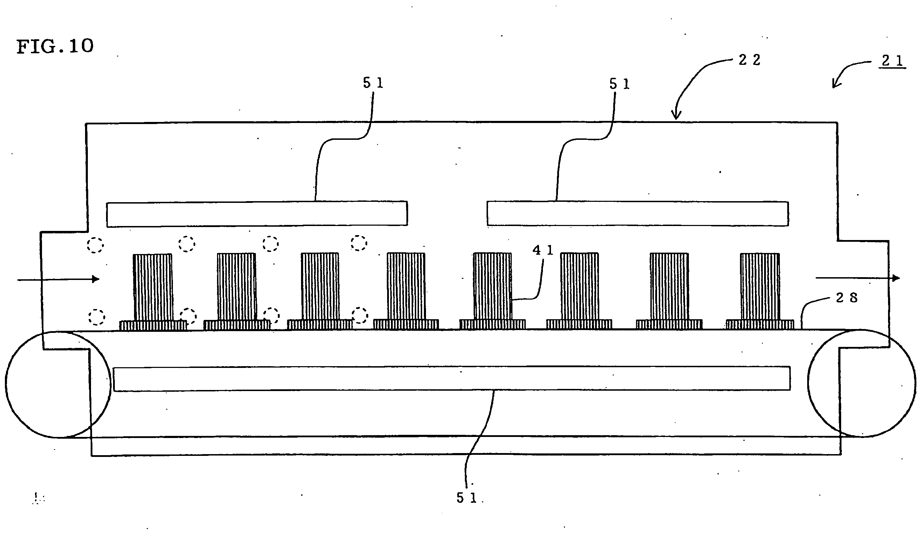

Fig. 9 is a cross-sectional view schematically showing a cross section perpendicular to a direction for conveying a honeycomb formed article of another embodiment of a drying apparatus for a honeycomb formed article of the present invention, the drying apparatus being used for carrying out a method for drying a honeycomb formed article of the present invention. In addition, Fig. 10 is a cross-sectional view schematically showing a cross section in parallel with a direction for conveying a honeycomb formed article of another embodiment of a drying apparatus for a honeycomb formed article of the present invention, the drying apparatus being used for carrying out a method for drying a honeycomb formed article of the present invention. Incidentally, in Fig. 10, the superheated steam generator and the pipes are omitted. In Figs. 9 and 10, the same reference numerals are imparted to the constituent elements which are the same as constituent elements shown in Figs. 7 and 8 showing the aforementioned one embodiment of a drying apparatus for a honeycomb formed article of the present invention. Though the drying apparatus for a honeycomb formed article of the present embodiment is a continuous type, where honeycomb formed articles are conveyed by a belt conveyer, a drying apparatus for a honeycomb formed article of the present invention is not limited to such a continuous type and may be a batch type capable of treating one or a plurality of honeycomb formed articles at the same time.

In a method for drying a honeycomb formed article of the present embodiment, in the aforementioned one embodiment of a drying method for a honeycomb formed article, an unfired honeycomb formed article 41 is dielectrically heated in a superheated steam atmosphere having a temperature of 100 to 200°C in the treatment chamber 22. In the drying apparatus 21 for a honeycomb formed article used in the present embodiment, the electrodes 51 for generating high-frequency waves used for dielectric heating instead of a waveguide are disposed in the upper and lower portions of the honeycomb formed article 41. This enables to obtain results similar to those in the case of the aforementioned one embodiment of a method for drying a honeycomb formed article of the present invention using microwaves.

The frequency of the high-frequency waves used for dielectric heating is preferably 2 to 100 MHz, more preferably 10 to 50 MHz.

Next, one embodiment of a drying apparatus for a honeycomb formed article of the present invention will further be described. As described above, the drying apparatus 21 for a honeycomb formed article of the present embodiment shown in Figs . 7 and 8 is provided with a treatment chamber 22 for drying an unfired honeycomb formed article 41 in the inside thereof, a superheated steam generator 23 for generating superheated steam and allowing the superheated steam to flow into the treatment chamber 22, a superheated steam inflow port 25 disposed inside the treatment chamber 22, and a waveguide 26 disposed in the treatment chamber 22 and introducing microwaves into the treatment chamber 22.

The treatment chamber 22 and the belt conveyer 28 are not particularly limited, and known treatment chamber and belt conveyer used for drying and firing a honeycomb formed article can be employed.

The shape of the wave guide 26 can suitably be determined according to the frequency of the microwaves used.

The shape of the superheated steam inflow port 25 is not particularly limited and may be a shape of a tip portion of a pipe or a shape from which superheated steam is irradiated by making a hole in a pile.

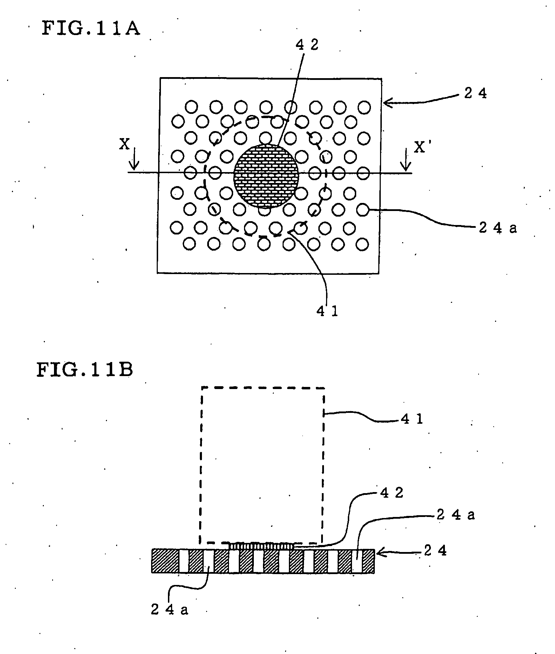

Though the conveyance palette 24 is not particularly limited, it is preferably a plate-shaped member where a plurality of through-holes 24a extending along in the direction of a normal line (normal line of a surface of the plate-shaped member) are formed as shown in Figs. 11A and 11B. Here, Fig. 11A is a plan view showing a state that a flow rate-adjusting plate is mounted on a conveyance palette. Fig. 11B is a cross-sectional view cut along X-X' of Fig. 11A. The material for the conveyance palette is not particularly limited, and fluorine resin or the like can be used. Such formation of through-holes 24a enables superheated steam to flow into the honeycomb formed article from the lower portion of the conveyance palette 24, and the honeycomb formed article 41 can be dried more uniformly. In addition, it is preferable that a larger amount of superheated steam is allowed to flow in the outer peripheral portion than in the inside portion of the honeycomb formed article 41. For example, as shown in Figs. 11A and 11B, a mesh flow rate-adjusting plate 42 is preferably disposed in the position corresponding with the inside portion of the honeycomb formed article 41. The flow rate-adjusting plate 42 impedes and can reduce flow of the superheated steam into the inside portion of the honeycomb formed article 41 when superheated steam is allowed to flow into the honeycomb formed article 41 from the bottom portion of the conveyance palette 42. In addition, relatively a large amount of superheated steam can be sent into the outer peripheral portion of a honeycomb formed article 41. This enables to control the flow rate of the superheated steam flowing into the unfired honeycomb formed article 41 in such a manner that the flow rate of the outer peripheral portion is higher than that of the inside portion. Though the flow rate-adjusting plate 42 is preferably mesh, it may be a plate-shaped member without hole, or the like. The material for the flow rate-adjusting plate 42 is not particularly limited, and fluorine resin of the like can be used.

The superheated steam generator 23 is not particularly limited, and a known superheated steam generator can be employed. For example, there may be employed a superheated steam generator of an introduction-heating type, a burner type, an electric heater type, or the like.

In another embodiment of a drying apparatus for a honeycomb formed article of the present invention, as shown in Figs. 9 and 10, electrodes 51 for generating high frequency used for dielectric heating are disposed over and under the honeycomb formed article 41 instead of a waveguide. The other constituents are similar to those in the case of the aforementioned one embodiment of drying apparatus for a honeycomb formed article of the present invention. The frequency of the high-frequency waves generated between the electrodes 51 is preferably 2 to 100 MHz, more preferably 10 to 50 MHz. This enables to obtain an effect similar to the case of the aforementioned one embodiment of a drying method for a honeycomb formed article of the present invention.

### Example

The present invention is specifically described on the basis of Examples. However, the present invention is by no means limited to these Examples.

### (Examples 1 to 8) - reference examples

Honeycomb formed articles 1 each having an outer shape as shown in Fig. 2 (outer diameter × flow passage length: 80 mm × 100 mm, cell density: 50 cells/cm², partition wall thickness: 0.3 mm) were prepared, each using a ceramic raw material and a forming auxiliary such as a binder. The honeycomb formed articles were subjected to a pretreatment (drying) before firing in conditions shown in Table 1 using a continuous treatment apparatus 10 having the constitution shown in Fig. 3. Incidentally, the lengths of the zone (1) 11, zone (2) 12, and zone (3) 13 of the continuous treatment apparatus 10 in the traveling direction are 1.0 m, 1.0 m, and 1.0 m, respectively. In addition, the feed rate in the continuous treatment apparatus 10 was 0.33 m/min. The mass (initial mass (g)) before the pretreatment before firing, the mass (g) after the pretreatment, and the mass reduction rate (%) of each of the honeycomb formed articles were shown in Table 1. In addition, a graph where the mass reduction rate (%) is plotted with respect to the superheated steam temperature (zone (2)) (°C) is shown in Fig. 5. As shown in Table 1, it is clear that there arises a difference in proceeding speed of drying depending on temperature of the superheated steam. Incidentally, it was found out that, the higher the temperature of the superheated steam is, the higher the drying speed is.

**Table 1**

| | | Example 1 | Example 2 | Example 3 | Example 4 | Example 5 | Example 6 | Example 7 | Example 8 |
|---|---|---|---|---|---|---|---|---|---|
| Boiler preset temperature (°C) | | 120 | 150 | 170 | 200 | 250 | 300 | 350 | 350 |
| Treatment time (min.) | | 10 | 10 | 10 | 10 | 10 | 10 | 10 | 30 |
| Steam temperature (°C) | | 136 | 164 | 172 | 210 | 259 | 298 | 351 | 350 |
| Superheated steam temperature (°C) | Zone (1) | 72 | 99 | 107 | 126 | 161 | 192 | 224 | 230 |
| | Zone (2) | 102 | 127 | 134 | 167 | 207 | 239 | 288 | 291 |
| | Zone (3) | 95 | 113 | 120 | 157 | 195 | 224 | 277 | 275 |
| Initial mass (g) | | 168 | 180 | 162 | 162 | 162 | 156 | 164 | 158 |
| Mass after pretreatment (g) | | 166 | 174 | 154 | 150 | 144 | 136 | 128 | 112 |
| Mass reduction rate (%) | | 1 | 3 | 5 | 7 | 11 | 13 | 22 | 29 |
| Presence of breakage | | None | None | None | None | None | None | None | None |

### (Comparative Examples 1 to 5)

The pretreatment (drying) before firing was performed in the same manner as in the aforementioned Examples 1 to 8 except that hot air was used instead of superheated steam and that conditions were as shown in Table 2. The mass (initial mass (g)) before the pretreatment before firing, the mass (g) after the pretreatment (g), and the mass reduction rate (%) are shown in Table 2. As shown in Table 2, a breakage was generated in the outer periphery of each of the products under any of the drying conditions.

**Table 2**

| | | Comp. Ex. 1 | Comp. Ex. 2 | Comp. Ex. 3 | Comp. Ex. 4 | Comp. Ex. 5 |
|---|---|---|---|---|---|---|
| Treatment time (min.) | | 10 | 10 | 10 | 10 | 10 |
| Hot air preset temperature (°C) | | 70 | 90 | 100 | 150 | 200 |
| Hot air preset temperature (°C) | Zone (1) | 65 | 85 | 95 | 140 | 190 |
| | Zone (2) | 70 | 90 | 100 | 150 | 200 |
| | Zone (3) | 65 | 85 | 95 | 145 | 195 |
| Initial mass (g) | | 170 | 180 | 185 | 180 | 175 |
| Mass after pretreatment (g) | | 165 | 165 | 163 | 157 | 150 |
| Mass reduction rate (%) | | 3 | 8 | 12 | 13 | 14 |
| Presence of breakage | | Present | Present | Present | Present | Present |

### (Example 9 to 12)

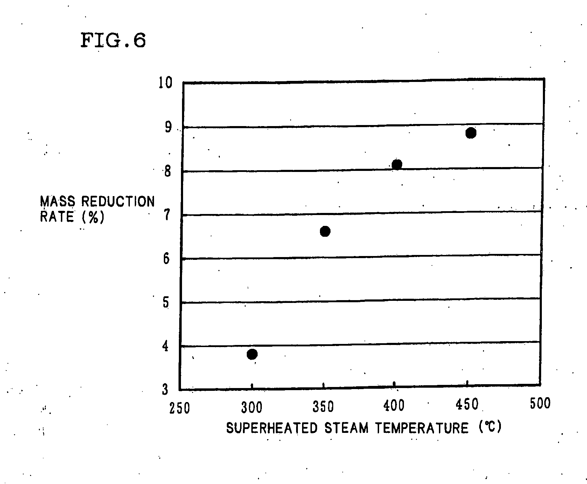

There were prepared honeycomb formed articles (dried articles) (outer diameter × flow passage length: 150 mm x 200 mm) subjected to drying under the same conditions as in Example 3 except that the treatment time was 40 min. The honeycomb formed articles prepared above were subjected to the pretreatment (degreasing) before firing under the conditions shown in Table 3. Mass (initial mass (g)), before the pretreatment before firing, mass (g) after the treatment, and the mass reduction rate (%) of each of the honeycomb formed articles are shown in Table 3. In addition, a graph where a mass reduction rate (%) is plotted with respect to a superheated steam temperature (°C) is shown in Fig. 6. As shown in Table 3, under any of the conditions, mass of the honeycomb formed articles after the treatment decreased, and the color changed from white to gray. In addition, the honeycomb formed articles obtained by the treatment under the conditions shown in Examples 9 and 10 were slightly brittle and required some attention to handling. On the other hand, the honeycomb formed articles obtained by the treatment under the conditions shown in Examples 11 and 12, where the treatment temperature was made lower than that of Examples 9 and 10, was hard enough to handle easily.

**Table 3**

| | Example 9 | Example 10 | Example 11 | Example 12 |
|---|---|---|---|---|
| Superheated steam temperature (°C) | 450 | 400 | 350 | 300 |
| Treatment time (min.) | 10 | 10 | 10 | 30 |
| Initial mass (g) | 434 | 420 | 426 | 420 |
| Mass after pretreatment (g) | 396 | 386 | 398 | 404 |
| Mass reduction rate (%) | 8.8 | 8.1 | 6.6 | 3.8 |

### (Example 13) - reference example

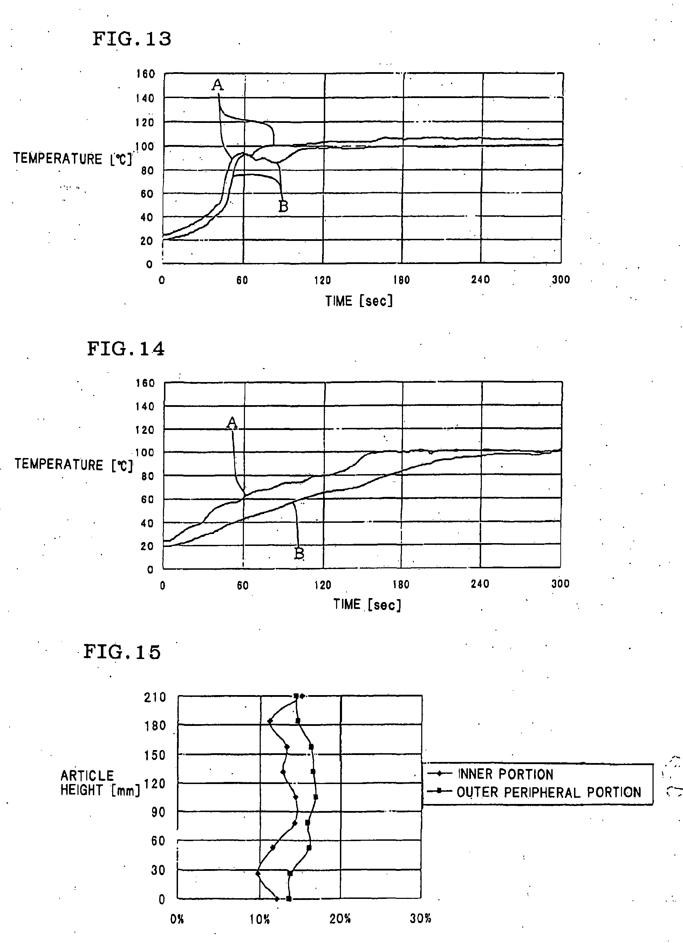

There was prepared a honeycomb formed article (outer diameter × flow passage length: 113 mm × 210 mm, cell density: 93 cells/cm², partition wall thickness: 0.1 mm) having the outer shape as shown in Fig. 2 and manufactured by using a ceramic raw material and a forming auxiliary such as a binder. The honeycomb formed article was dried by the use of a honeycomb formed article-drying apparatus 21 having a constituting shown in Figs. 7 and 8. Incidentally, the superheated steam inflow port 25 disposed in the lower portion of the honeycomb formed article 41 was not used. Microwaves having a frequency of 2.45 GHz were irradiated for 300 seconds with an output density of 5kW/kg. The temperature of the superheated steam atmosphere in the treatment chamber 22 was made to be 130°C. The feed speed of the belt conveyer 28 was 0.32 m/min. The honeycomb formed article under drying was measured for temperature change at the central point A (inner portion A) in the upper end face and at the position B (outer peripheral portion B) which is 10 mm away from the outermost periphery of the upper end face toward the center. The results are shown in Fig. 13. In Fig. 13, the symbol A shows the temperature change in the inner portion A, and the symbol B shows the temperature change in the outer peripheral portion B.

### (Comparative Example 6)

The honeycomb formed article was dried in the same manner as in Example 13 except that the superheated steam atmosphere was not employed in the treatment chamber 22. In the same manner as in Example 13, the honeycomb formed article under drying was measured for temperature. The results are shown in Fig. 14. In Fig. 14, the symbol A shows the temperature change in the inner portion A, and the symbol B shows the temperature change in the outer peripheral portion B.

### (Example 14) - reference example

There was prepared a honeycomb formed article (outer diameter × flow passage length: 113 mm × 210 mm, cell density: 93 cells/cm², partition wall thickness: 0.1 mm) having the outer shape as shown in Fig. 2 and manufactured by using a ceramic raw material and a forming auxiliary such as a binder. The honeycomb formed article was dried by the use of a honeycomb formed article-drying apparatus 21 having a constituting shown in Figs. 7 and 8. Incidentally, the superheated steam inflow port 25 disposed in the lower portion of the honeycomb formed article 41 was not used. Microwaves having a frequency of 2.45GHz were irradiated for 100 seconds with an output density of 5kW/kg. The temperature of the superheated steam atmosphere in the treatment chamber 22 was made to be 130°C. The feed speed of the belt conveyer 28 was 0.32 m/min. The honeycomb formed article after drying was measured for remaining water amount at nine positions with different height from the lower end face to the upper end face of each of the positions corresponding with the inner portion A and the outer peripheral portion B. The results are shown in Fig. 15.

### (Comparative Example 7)

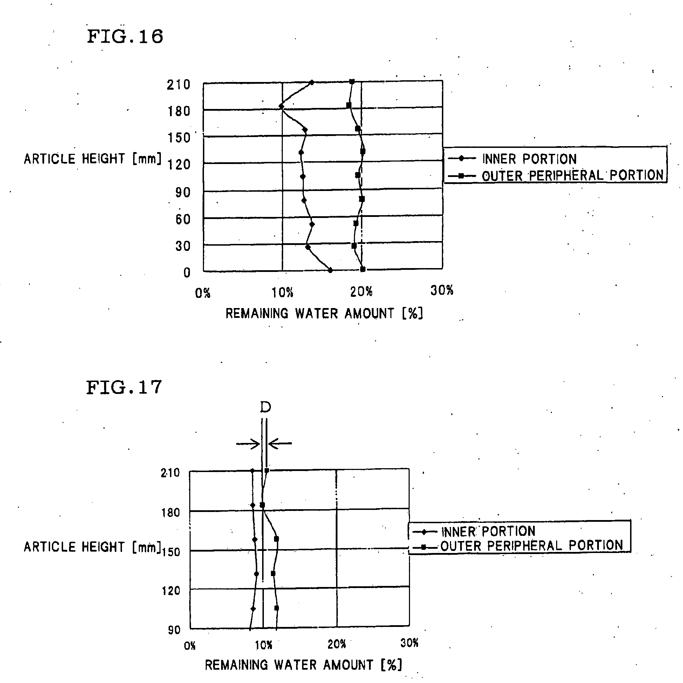

The honeycomb formed article was dried in the same manner as in Example 14 except that the superheated steam atmosphere was not employed in the treatment chamber 22. In the same manner as in Example 14, the honeycomb formed article after drying was measured for remaining water amount. The results are shown in Fig. 16.

From the results of Example 13 and Comparative Example 6, it can be understood that the difference in temperature rise rate between the inner portion A and the outer peripheral portion B was within 30 seconds. In addition, it can be understood that the temperature rise time up to 100°C became about half. From the results of Example 14 and Comparative Example 7, it can be understood that the difference in water amount between the positions corresponding to the inner portion A and the outer peripheral portion B could be made half or less.

### (Example 15) reference example

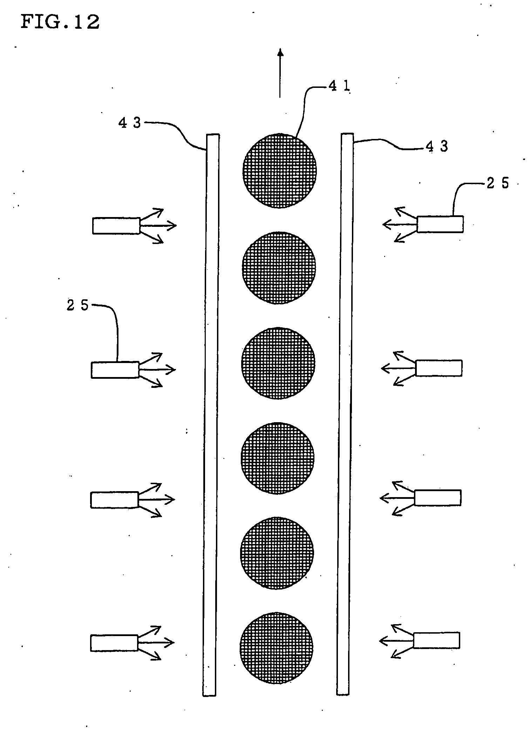

There was prepared a honeycomb formed article (outer diameter × flow passage length: 113 mm × 210mm, cell density: 93 cells/cm², partition wall thickness: 0.1 mm) having the outer shape as shown in Fig. 2 and manufactured by using a ceramic raw material and a forming auxiliary such as a binder. The honeycomb formed article was dried by the use of a honeycomb formed article-drying apparatus 21 having a constituting shown in Figs. 7 and 8 with shielding plates 43 as shown in Fig. 12 disposed therein. Here, Fig. 12 is a plan view schematically showing a part of another embodiment of a drying apparatus for a honeycomb formed article of the present invention and a honeycomb formed article. The plate-shaped shielding plates 43 were set up in both the side portions of the conveyance path where the honeycomb formed article is conveyed in such a manner that the conveyance palette 24 is sandwiched by the shielding plates 43 to limit the incidence of the microwaves from a horizontal direction with respect to the honeycomb formed article 41. The material for the shielding plates 43 was aluminum. Incidentally, the superheated steam inflow port 25 disposed in the lower portion of the honeycomb formed article 41 was not used. Microwaves having a frequency of 2.45GHz were irradiated for 200 seconds with an output density of 5kW/kg. The temperature of the superheated steam atmosphere in the treatment chamber 22 was made to be 130°C. The feed speed of the belt conveyer 28 was 0.32 m/min. The honeycomb formed article after drying was measured for remaining water amount at five positions with different height from the position 90 mm away from the lower end face to the upper end face of each of the positions corresponding with the inner portion A and the outer peripheral portion B. The results are shown in Fig. 17.

From the results of Example 15, it can be understood that the difference in water amount in the upper end portion can be improved from about 4% to 0.7% in comparison with the results of Example 14. The difference in water amount in the upper end portion means the difference in remaining water amount in the positions in the same radial direction in the vicinity of 5mm and from the upper end portion and 30 mm from the upper end portion of the honeycomb formed article. For example, the difference in water amount shown in the difference D in water amount in Fig. 17 corresponds to the difference in water amount in the upper end portion.

### Industrial Applicability

According to a method for pretreating a honeycomb formed article before firing and a pretreatment method before firing, a honeycomb formed article, which is an unfired article of a honeycomb structure widely used for a catalyst carrier, various kinds of filters such as a DPF, or the like, can suitably be treated.

## Claims

1. A method for pretreating an unfired honeycomb formed article (1) of a raw material composition containing a ceramic raw material, water, and a binder and having a plurality of cells (3) separated by partition walls (2) and functioning as fluid passages before firing,
wherein the method has a first step, for removing water in the honeycomb formed article to dry the honeycomb formed article, of passing superheated steam having a temperature of 100 to 150°C through the cells (3) to raise temperature of the honeycomb formed article (1) and then maintaining the temperature of the superheated steam at the temperature of the superheated steam passed through the cells (3) or more and 200°C or less; and
wherein, after the first step, the method further has a second step, for removing the binder in the honeycomb formed article having a higher boiling point than that of water, where the honeycomb formed article (1) is maintained in an atmosphere of superheated steam at a temperature greater than the temperature in the first step and 600°C or less to remove binder from the honeycomb formed article (1).

2. A method for pretreating a honeycomb formed article (1) before firing according to claim 1, wherein, in the first step, after the temperature of the honeycomb formed article (1) is raised and held in equilibrium, the temperature of the superheated steam is maintained at the temperature of the superheated steam passed through the cells (3) or more and 200°C or less.

3. A method for pretreating a honeycomb formed article (1) before firing according to claim 1 or claim 2, wherein the first step and the second step are continuously performed by one treatment apparatus (10).

4. A method for pretreating a honeycomb formed article (1) before firing according to any one of claims 1 to 3, wherein the honeycomb formed article (1) is subjected to microwave heating and/or dielectric heating in the first step and/or the second step.

5. A method for pretreating a honeycomb formed article (1) before firing having:
a pretreatment step before firing for performing a method for pretreating a honeycomb formed article (1) according to any one of claims 1 to 4,
a primary separation step for separating exhaust gas generated in the pretreatment step before firing and containing components derived from water and a binder into gas components containing a component derived from the binder and liquid components containing the water,
a secondary separation step for separating the liquid component into the water and the other components, and
a reuse step for obtaining superheated steam by heating the separated water and feeding the superheated steam in the pretreatment step before firing.

6. A method for pretreating a honeycomb formed article (1) before firing according to claim 5, wherein the method further includes a deodorization step for deodorizing at least a part of the gas components.

7. A method for drying a honeycomb formed article (41) that is used as the first step of the method for pretreating a honeycomb formed article (1) before firing according to any one of claims 1 to 6,
wherein the unfired honeycomb formed article (41) is dried by microwave heating and/or dielectric heating in a treatment chamber (22) in a superheated steam atmosphere at 100 to 200°C; and
wherein the superheated steam is allowed to flow into the unfired honeycomb formed article (41) from one end face in such a manner that the flow rate in an outer peripheral portion is higher than that in the inside portion.

8. A method for drying a honeycomb formed article (41) according to claim 7, wherein the steam discharged from the treatment chamber (22) is heated again to obtain superheated steam, which is allowed to flow into the treatment chamber (22) again.

## Patentansprüche

1. Verfahren zum Vorbehandeln eines ungebrannten Wabenstrukturerzeugnisses (1) einer Rohmaterialzusammensetzung, die ein Keramikrohmaterial, Wasser und ein Bindemittel umfasst und eine Vielzahl von Zellen (3) aufweist, die von Trennwänden (2) getrennt sind und vor dem Brennen als Fluiddurchlässe fungieren,
wobei das Verfahren zum Entfernen von Wasser im Wabenstrukturerzeugnis, um das Wabenstrukturerzeugnis zu trocknen, einen ersten Schritt des Hindurchleitens von überhitztem Dampf mit einer Temperatur von 100 bis 150 °C durch die Zellen (3) aufweist, um die Temperatur des Wabenstrukturerzeugnisses (1) zu erhöhen, und die Temperatur des überhitzten Dampfes dann bei der Temperatur des durch die Zellen (3) hindurchgeleiteten Dampfes oder höher und 200 °C oder niedriger gehalten wird; und
wobei nach dem ersten Schritt das Verfahren außerdem einen zweiten Schritt zum Entfernen des Bindemittels im Wabenstrukturerzeugnis umfasst, das einen höheren Siedepunkt als Wasser aufweist, wobei das Wabenstrukturerzeugnis (1) in einer Atmosphäre von überhitztem Dampf bei einer höheren Temperatur als die Temperatur des ersten Schritts und 600 °C oder niedriger gehalten wird, um das Bindemittel aus dem Wabenstrukturerzeugnis (1) zu entfernen.

2. Verfahren zum Vorbehandeln eines Wabenstrukturerzeugnisses (1) vor dem Brennen nach Anspruch 1, wobei im ersten Schritt, nachdem die Temperatur des Wabenstrukturerzeugnisses (1) erhöht und im Gleichgewicht gehalten wurde, die Temperatur des überhitzten Dampfes bei der Temperatur des durch die Zellen (3) geleiteten überhitzten Dampfes oder höher und 200 °C oder niedriger gehalten wird.

3. Verfahren zum Vorbehandeln eines Wabenstrukturerzeugnisses (1) vor dem Brennen nach Anspruch 1 oder Anspruch 2, wobei der erste Schritt und der zweite Schritt fortlaufend von einer Behandlungsvorrichtung (10) durchgeführt werden.

4. Verfahren zum Vorbehandeln eines Wabenstrukturerzeugnisses (1) vor dem Brennen nach einem der Ansprüche 1 bis 3, wobei das Wabenstrukturerzeugnis (1) einem Mikrowellenerhitzen und/oder dielektrischen Erhitzen im ersten Schritt und/oder zweiten Schritt unterzogen wird.

5. Verfahren zum Vorbehandeln eines Wabenstrukturerzeugnisses (1) vor dem Brennen, das Folgendes umfasst:
einen Vorbehandlungsschritt vor dem Brennen zum Durchführen eines Verfahrens zum Vorbehandeln eines Wabenstrukturerzeugnisses (1) nach einem der Ansprüche 1 bis 4,
einen primären Trennschritt zum Auftrennen von Abgas, das im Vorbehandlungsschritt vor dem Brennen erzeugt wurde und von Wasser und einem Bindemittel abgeleitete Komponenten umfasst, in Gaskomponenten, die eine vom Bindemittel abgeleitete Komponente enthalten, und Flüssigkomponenten, die das Wasser enthalten,
einen sekundären Trennschritt zum Auftrennen der Flüssigkomponente in Wasser und die anderen Komponenten und
einen Wiederverwendungsschritt zum Erhalten von überhitztem Dampf durch Erhitzen des abgetrennten Wassers und Einspeisen des überhitzten Dampfes im Vorbehandlungsschritt vor dem Brennen.

6. Verfahren zum Vorbehandeln eines Wabenstrukturerzeugnisses (1) vor dem Brennen nach Anspruch 5, wobei das Verfahren außerdem einen Desodorierungsschritt zum Desodorieren von zumindest einem Teil der Gaskomponenten umfasst.

7. Verfahren zum Trocknen eines Wabenstrukturerzeugnisses (41), das als erster Schritt eines Verfahrens zum Vorbehandeln eines Wabenstrukturerzeugnisses (1) vor dem Brennen nach einem der Ansprüche 1 bis 6 genutzt wird,
wobei das ungebrannte Wabenstrukturerzeugnis (41) durch Mikrowellenerhitzen und/oder dielektrisches Erhitzen in einer Behandlungskammer (22) in einer überhitzten Dampfatmosphäre bei 100 bis 200 °C getrocknet wird; und
wobei der überhitzte Dampf in das ungebrannte Wabenstrukturerzeugnis (41) von einer Endfläche so strömen gelassen wird, dass die Durchflussrate in einem äußeren Umfangsabschnitt höher als die im inneren Abschnitt ist.

8. Verfahren zum Trocknen eines Wabenstrukturerzeugnisses (41) nach Anspruch 7, wobei der Dampf, der von der Behandlungskammer (22) abgegeben wird, erneut erhitzt wird, um überhitzten Dampf zu erhalten, der erneut in die Behandlungskammer (22) strömen gelassen wird.

## Revendications

1. Procédé de prétraitement d'un article formé en nid d'abeille non cuit (1) d'une composition de matière première contenant une matière première de céramique, de l'eau et un liant et comprenant une pluralité de cellules (3) séparées par des cloisons (2) et servant de passages de fluide avant cuisson,
dans lequel le procédé comporte une première étape, pour éliminer l'eau dans l'article formé en nid d'abeille pour sécher l'article formé en nid d'abeille, consistant à faire passer de la vapeur surchauffée ayant une température de 100 à 150°C à travers les cellules (3) pour augmenter la température de l'article formé en nid d'abeille (1) puis à maintenir la température de la vapeur surchauffée à la température de la vapeur surchauffée étant passée à travers les cellules (3) ou plus, et à 200°C ou moins ; et
dans lequel, après la première étape, le procédé comporte en outre une seconde étape pour éliminer le liant dans l'article formé en nid d'abeille ayant un point d'ébullition plus élevé que celui de l'eau, l'article formé en nid d'abeille (1) étant maintenu dans une atmosphère de vapeur surchauffée à une température supérieure à la température dans la première étape et inférieure ou égale à 600°C pour éliminer le liant de l'article formé en nid d'abeille (1).

2. Procédé de prétraitement d'un article formé en nid d'abeille (1) avant cuisson selon la revendication 1, dans lequel, dans la première étape, une fois que la température de l'article formé en nid d'abeille (1) a été augmentée et maintenue à l'équilibre, la température de la vapeur surchauffée est maintenue à la température de la vapeur surchauffée étant passée à travers les cellules (3) ou plus, et à 200°C ou moins.

3. Procédé de prétraitement d'un article formé en nid d'abeille (1) avant cuisson selon la revendication 1 ou la revendication 2, dans lequel la première étape et la seconde étape sont effectuées en continu par un appareil de traitement (10).

4. Procédé de prétraitement d'un article formé en nid d'abeille (1) avant cuisson selon l'une quelconque des revendications 1 à 3, dans lequel l'article formé en nid d'abeille (1) est soumis à un chauffage par micro-ondes et/ou à un chauffage diélectrique dans la première étape et/ou la seconde étape.

5. Procédé de prétraitement d'un article formé en nid d'abeille (1) avant cuisson, comportant :
une étape de prétraitement avant cuisson pour mettre en œuvre un procédé de prétraitement d'un article formé en nid d'abeille (1) selon l'une quelconque des revendications 1 à 4,
une étape de séparation primaire pour séparer des gaz d'échappement générés lors de l'étape de prétraitement avant cuisson et contenant des composants dérivés d'eau et d'un liant en composants gazeux contenant un composant dérivé du liant et des composants liquides contenant de l'eau,
une étape de séparation secondaire pour séparer le composant liquide en eau et les autres composants, et
une étape de réutilisation pour obtenir de la vapeur surchauffée en chauffant l'eau séparée et en alimentant la vapeur surchauffée dans l'étape de prétraitement avant cuisson.

6. Procédé de prétraitement d'un article formé en nid d'abeille (1) avant cuisson selon la revendication 5, dans lequel le procédé comprend en outre une étape de désodorisation pour désodoriser au moins une partie des composants gazeux.

7. Procédé de séchage d'un article formé en nid d'abeille (41) qui est utilisé comme première étape du procédé de prétraitement d'un article formé en nid d'abeille (1) avant cuisson selon l'une quelconque des revendications 1 à 6,
dans lequel l'article formé en nid d'abeilles non cuit (41) est séché par chauffage par micro-ondes et/ou chauffage diélectrique dans une chambre de traitement (22) dans une atmosphère de vapeur surchauffée à une température de 100 à 200°C ; et
dans lequel la vapeur surchauffée est autorisée à s'écouler jusque dans l'article formé en nid d'abeilles non cuit (41) depuis une face d'extrémité de manière à ce que le débit d'écoulement dans une partie périphérique externe soit supérieur à celui dans la partie interne.

8. Procédé de séchage d'un article formé en nid d'abeille (41) selon la revendication 7, dans lequel la vapeur évacuée de la chambre de traitement (22) est chauffée à nouveau pour obtenir de la vapeur surchauffée, qui est ensuite autorisée à s'écouler à nouveau jusque dans la chambre de traitement (22).
